# FASCICULE DE BREVET EUROPEEN

(11) **EP 3 420 037 B1**
(45) Date de publication et mention de la délivrance du brevet: **07.09.2022**
(21) Numéro de dépôt: 17705661.1
(22) Date de dépôt: 21.02.2017
(51) Int. Cl.: C09D 5/00, C08K 5/5337, G04B 31/08, C10M 105/02

(54) **COMPOSITIONS A BASE DE COMPOSES BISPHOSPHONIQUES DISSOUS DANS UN SOLVANT FLUORE AINSI QUE LEUR UTILISATION POUR RECOUVRIR LA SURFACE D'UNE PIECE**
ZUSAMMENSETZUNGEN BASIEREND AUF BIPHOSPHONDERIVATEN AUFGELÖST IN EINEM FLUORHALTIGEN LÖSUNGSMITTEL UND IHRE VERWENDUNG ZUM BESCHICHTEN DER OBERFLÄCHE EINES ARTIKELS
COMPOSITIONS BASED ON BIPHOSPHONIC COMPONENTS SOLUBILIZED IN A FLUORINATED SOLVANT AND THEIR USE FOR COATING A SURFACE OF AN ARTICLE

(30) Priorité: 22.02.2016 FR 1651442
(43) Date de publication de la demande: 02.01.2019
(73) Titulaire: Surfactis Technologies, 49100 Angers (FR)
(72) Inventeur: BEJANIN, Stéphane, 75005 Paris (FR); PORTET, David, 49125 Briollay (FR)
(74) Mandataire: Regimbeau
(86) Numéro de dépôt international: PCT/EP2017/053959
(87) Numéro de publication internationale: WO 2017/144480

(56) Documents cités:
- WO-A1-2012/085130
- WO-A2-2008/017721

## Description

### RESUME

La présente invention concerne des compositions liquides à base d'au moins un composé bisphosphonique porteur d'au moins un groupement fluoré, perfluoré ou perfluoropolyéther, dissous dans au moins un solvant non inflammable fluoré, l'utilisation de ces compositions pour augmenter les propriétés lipophobes et limiter l'étalement des lubrifiants et des hydrocarbures sur une surface traitée et/ou augmenter les propriétés hydrophobes et limiter l'étalement des solutions aqueuses sur une surface à traiter.

La présente invention s'étend également à un procédé de recouvrement de la surface d'une pièce par une couche de fonctionnalisation à l'aide d'une des compositions précitées.

Enfin, la présente invention englobe les pièces fonctionnalisées obtenues par la mise en œuvre du procédé selon l'invention et plus particulièrement des pièces de mécanismes ou de dispositifs intégrés dans un article d'horlogerie, de micromécanique, de fluidique, d'électronique, d'optique, d'optronique et dans des systèmes de mesures.

### DESCRIPTION DE L'INVENTION

Il est connu que les composés bisphosphoniques porteurs d'un groupement partiellement fluoré, perfluoré (PF) ou perfluoropolyéther (PFPE) déposés en monocouche modifient les propriétés de mouillabilité et rendent hydrophobes et lipophobes les surfaces qu'ils recouvrent (FR 2904784 et EP 2054165). Ces composés sont capables de se fixer en monocouches auto-assemblées sur des matériaux minéraux ou métalliques comme le rubis, le saphir, le fer, le titane, le cuivre, l'aluminium, le nickel, l'étain ou sur des métaux en alliage par exemple, l'acier, l'acier inoxydable, le laiton, le maillechort, le bronze, l'étain-nickel, le nickel-phosphore, le cuivre-béryllium. En revanche, dans des solvants comme par exemple les solvants alcooliques, ces molécules n'ont qu'une affinité limitée pour des matériaux dans un état d'oxydation réduit ou faiblement oxydé comme certains polymères, tels que le polycarbonate, le polyméthylméthacrylate et le polyoxyméthylène, et certains métaux nobles tels que l'or, l'argent et le rhodium.

Cependant, les solvants jusqu'alors proposés pour dissoudre les composés BP fluorés étaient des solvants aqueux, alcooliques, des aldéhydes, des cétones, des éthers, des alcanes, les naphtas ou leur mélange (cf. EP 2054165, WO 2013/167624, WO 2012/085130).

La quantité de composés BP fluorés utilisée dans les solutions de recouvrement de l'art antérieur était d'environ 1mM (cf. EP 2054165, WO 2013/167624, WO 2012/085130).

Le temps de contact entre les composés BP fluorés et les surfaces à traiter était systématiquement de plus de 5 minutes (WO 2013/167624, WO 2012/085130), pouvant même aller jusqu'à trois heures sur certains supports (cf. EP 2054165).

En conséquence, il était connu dans l'art antérieur que, pour rendre hydrophobe ou oléophobe une surface en utilisant des composés BP fluorés, il fallait utiliser de grandes quantités de composés BP-PF ou BP-PFPE, et/ou laisser la solution de recouvrement en contact avec la surface à traiter pendant un temps relativement long.

Cette limitation entraîne qu'il était impossible d'utiliser ces solutions dans des systèmes automatisés à haut débit et/ou dans des applications nécessitant la pulvérisation de la solution de recouvrement (par exemple dans des usines de fabrication de micro-moteurs).

De plus, une étape de séchage ou de déshydratation était souvent nécessaire pour faciliter l'évaporation du solvant (cf. EP 2054165, WO 2013/167624, WO 2012/085130), la température de ces procédés n'était pas nécessairement compatible avec tous les types de surface (par exemple les matériaux thermoplastiques).

Dans ce contexte, les présents Inventeurs ont cherché à identifier une méthode de fonctionnalisation de surface, plus rapide, permettant d'apporter durablement le caractère hydrophobe et lipophobe à des surfaces constituées de n'importe quel matériau, notamment le verre, le rubis, les polymères et les métaux faiblement oxydés, en un temps très court (moins d'une minute), et utilisant une quantité restreinte de composés de fonctionnalisation.

Les présents inventeurs ont identifié qu'il était possible de répondre à ce besoin en utilisant une solution contenant des composés bisphosphoniques partiellement fluorés qui ont été dissous dans un solvant non inflammable fluoré, et non dans un solvant alcoolique ou aqueux comme précédemment proposé.

La méthode et la composition décrites dans la présente demande procurent les avantages suivants par rapport à l'état de l'art :
- Elles sont efficaces sur tous les matériaux métalliques comme le fer, le titane, le cuivre, l'aluminium, le nickel, l'étain ou sur des métaux en alliage par exemple l'acier, l'acier carbone, l'acier inoxydable, le laiton, le maillechort, le bronze, l'étain-nickel, le nickel-phosphore, le cuivre-béryllium (exemples 1 à 15 ci-dessous),
- Elles sont efficaces pour des matériaux minéraux et céramiques comme le rubis (exemples 2, 5, 10, 11 ci-dessous),
- Elles sont efficaces sur des matériaux dans un état d'oxydation réduit ou faiblement oxydé comme certains métaux nobles en particulier l'or, l'argent et le rhodium (exemples 3, 5, 6, 8, 14 ci-dessous),
- Elles sont efficaces pour le traitement de composites et de polymères thermoplastiques et thermodurcissables, sur des matériaux hybrides tels que la plastoferrite (exemples 12, 13, 15 ci-dessous),
- le traitement de surface est très rapide par rapport à celui décrit dans l'art antérieur avec des composés bisphosphoniques porteurs d'un groupement partiellement fluoré, perfluoré (PF) ou perfluoropolyéther (PFPE) en solution dans un alcool. En effet, une immersion de 5 à 30 secondes dans la solution de l'invention suffit pour rendre hydrophobe et oléophobe le matériau traité, alors que les solutions de l'art antérieur, à concentration égales de composés de fonctionnalisation, ne sont pas efficaces aussi rapidement (exemples 4, 5, 6 ci-dessous).
- Le traitement des surfaces ne requiert aucune étape de chauffage.
- Le traitement de surface utilise une faible quantité de composés bisphosphoniques fluorés, porteurs d'un groupement partiellement fluoré, perfluoré (PF) ou perfluoropolyéther (PFPE) dans la solution de recouvrement (exemples 6, 7, 12 et 13) alors que les solutions de l'art antérieur requièrent une quantité supérieure de composés BP pour obtenir une efficacité de recouvrement équivalente (exemple 6).
- Le traitement de surface est résistant malgré de faibles quantités de molécules BP porteurs d'un groupement partiellement fluoré, perfluoré (PF) ou perfluoropolyéther (PFPE) et le faible temps de contact avec la surface (exemples 8 à 11 ci-dessous).
- L'application peut très facilement être réalisée par pulvérisation, en particulier en milieu industriel, et ne nécessite pas des installations industrielles anti déflagrantes (type ATEX) comme avec les solutions de l'art antérieur, notamment celles contenant des solvants inflammables (un alcool par exemple).

L'invention réside dans l'utilisation d'une molécule ou d'un mélange de molécules de types bisphosphoniques porteuses d'un groupement partiellement fluoré, perfluoré (PF) ou perfluoropolyéther (PFPE) dans un solvant non inflammable fluoré. De tels solvants présentent deux caractéristiques intéressantes dans le cadre de la présente invention : ils n'ont pas de point éclair et la vitesse d'évaporation du solvant sur une pièce traitée est très rapide, généralement inférieure à 60 secondes. L'utilisation d'un tel solvant non inflammable et à évaporation rapide permet de réaliser un traitement de surface dans un cadre industriel par trempage, pulvérisation ou dip coating, flow coating, roll to roll, bar coating et ne nécessite pas d'équipement anti déflagration (type ATEX).

La présente invention concerne plus particulièrement une composition liquide contenant au moins un composé bisphosphonique porteur d'au moins un groupement partiellement fluoré, perfluoré (PF) ou perfluoropolyéther (PFPE), ledit composé bisphosphonique étant dissous dans au moins un solvant non inflammable fluoré.

De préférence, ladite composition ne contient pas d'autres composés de fonctionnalisation que les composés bisphosphoniques porteurs d'un groupement partiellement fluoré, perfluoré (PF) ou perfluoropolyéther (PFPE) de l'invention.

Par « composé bisphosphonique », « composé gem-bisphosphonique », « molécule bisphosphonique » ou « acide bisphosphonique », ou "bisphosphonate" on entend ici un composé contenant au moins deux groupement PO₃ reliés à un même atome de carbone. Ces groupements peuvent être sous la forme phosphonate PO₃⁻ ou sous la forme acide phosphonique PO₃H. De tels composés sont décrits notamment dans EP 2 054 165.

Par « solvant », on entend ici une substance, de préférence liquide, qui a la propriété de dissoudre ou de diluer d'autres substances sans les modifier chimiquement et sans lui-même se modifier.

Par « solvant fluoré » on entend un solvant ou mélange de solvants dont au moins un des composants est partiellement fluoré ou perfluoré.

Par « non inflammable » ou « ininflammable », on entend ici un produit chimique ne présentant pas de point éclair ou présentant un point éclair supérieur à 60°C.

De préférence, les solvants de l'invention comprennent les HFC (hydrofluorocarbures), les HFE (hydrofluoroéthers), les HFO (Hydrofluorooléfines), les PFPE (perfluoropolyéthers).

Selon une caractéristique particulière de l'invention :
- les hydrofluorocarbures sont de préférence des hydrofluoro-(C₃₋₆) alcanes, en particulier le pentafluorobutane (HFC-365-mfc),
- les hydrofluoro-éthers sont de préférence des (C₁₋₄)alkoxy perfluoro-(C₄₋₈) alcanes, en particulier le méthoxy-nonafluorobutane (HFE-7100), l'éthoxy-nonafluorobutane (HFE-7200) et le 1,1,1,2,2,3,4,5,5,5-décafluoro-3-méthoxy-4-terfluorométhyle-pentane (HFE-7300),
- les hydrofluoroléfines sont de préférence celles en C₃ à C₁₀ contenant une seule double liaison éthylénique, en particulier le méthoxy tridécafluoro heptène, et
- les perfluoropolyéthers sont des molécules présentant une chaine carbonée perfluorée en C₂ à C₅ entrecoupée d'atomes d'oxygène, en particulier le polymère d'oxyde de perfluoropropylène.

Par « solvant ininflammable » ou « solvant non inflammable », on entend ici un solvant ou un mélange de solvants ne présentant pas de point éclair ou présentant un point éclair supérieur à 60°C.

Selon une caractéristique avantageuse de l'invention, ledit solvant ou mélange de solvants contient également des solvants non fluorés. La présence de solvant non fluoré pourra jouer le rôle de co-solvant facilitant la dissolution du composé bisphosphonique. De façon avantageuse, ledit solvant non fluoré est présent dans la composition de l'invention en une quantité allant de 0.5 à 10%, de préférence allant de 0.5% à 5%, de manière encore plus préférée de 0.5% à 2%. Cette quantité doit être suffisamment faible pour ne pas affecter les propriétés d'ininflammabilité.

En effet, il est parfois préférable, pour faciliter la dissolution du composé BP dans le solvant fluoré utilisé, d'ajouter une petite quantité de solvant non fluoré. C'est le cas par exemple des composés A et D présentés dans l'exemple 1. Pour ces composés particuliers, la présence d'environ 1% d'alcool dans le solvant fluoré dans lequel ils sont suspendus facilite leur dissolution et donc leur utilisation (cf. exemple 1).

Dans un mode de réalisation particulier de la composition selon l'invention, ledit solvant fluoré y est présent en mélange avec un alcool, tel que l'isopropanol, ce dernier étant présent à une concentration suffisamment faible pour ne pas affecter les propriétés d'ininflammabilité. De façon avantageuse, ledit solvant alcool est présent dans la composition de l'invention en une quantité allant de 0.5 à 10%, de préférence allant de 0.5% à 5%, de manière encore plus préférée de 0.5% à 2%.

Selon une caractéristique particulière de l'invention, ledit solvant fluoré, même lorsqu'il contient de l'alcool, ne présente pas de point d'éclair ou présente un point d'éclair supérieur à 100°C.

Selon une caractéristique particulière de l'invention, ledit solvant est un mélange de solvants se présentant sous la forme d'un mélange azéotropique.

Selon une caractéristique de l'invention, le composé bisphosphonique fluoré répond à la formule générale (I) suivante : 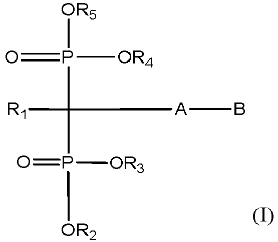 dans laquelle :
- R₂, R₃, R₄, R₅ représentent indépendamment l'un de l'autre un atome d'hydrogène ou un groupe alkyle en C₁-C₁₀, tel que méthyle ou éthyle ; de préférence R₂, R₃, R₄, R₅ sont identiques et représentent un atome d'hydrogène ;
- A représente une liaison chimique simple, -O-, -S- ou -NH-, de préférence une liaison chimique simple;
- B représente:
   a) une chaîne alkyle en C₁-C₁₀₀, linéaire ou ramifiée, saturée ou non, pouvant être perfluorée ou partiellement fluorée, et pouvant être substituée ou interrompue par 1 à 10 groupements aryles pouvant être perfluorés ou non; ou
   b) un groupement -(CH₂)ₘ-X dans lequel m est un entier compris entre 1 et 100 et X est un groupement alkyle en C₁-C₁₀₀ saturé ou non, pouvant être perfluoré ou partiellement fluoré, le groupement alkyle pouvant être substitué ou interrompu par 1 à 10 groupements aryle pouvant être perfluorés ou non;
   de préférence B représente un groupement alkyle en C₉-C₂₀ perfluoré ou partiellement fluoré; et
- R₁ représente un atome d'hydrogène ou un groupement -OH, -NH₂, ou alkyle en C₁- C₁₀₀, pouvant être perfluoré ou partiellement fluoré ; R₁ représente de préférence un groupement -OH,
ainsi que leurs sels toxicologiquement acceptables,
ou bien à la formule (I') suivante : 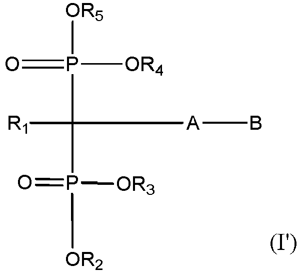 dans laquelle :
- B représente un groupement -(CH₂)ₘ-D-E dans lequel :
   - m est un entier compris entre 1 et 100,
   - D est une liaison chimique simple ou un groupement -O-, -S-, -OCO-, -COS-, -SCO-, -SCS-, -CONH-, -HNCO-, -HNCO-CF(CF₃)- ou -NH-CO-NH-, -NH-CS-NH-, et
   - E est un groupement ; -(O-CF₂-CF₂)ₙ-OR_{f}, -(O-CF₂-CF(CF₃))ₙ-OR_{f}, -(O-CF(CF₃)-CF₂)ₙ-OR_{f} ou -(O-CF₂-CF₂-CF₂)ₙ-OR_{f}, où n est un entier compris entre 1 et 100 et R_{f} est un groupement alkyle perfluoré en C1-C10, ou bien un groupement : 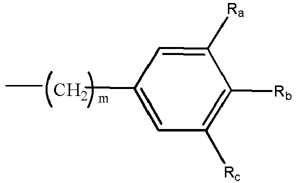 dans lequel, Rₐ, R_{b}, R_{c} représentent indépendamment l'un de l'autre un atome d'hydrogène, un alkyle en C₁-C₁₀₀ perfluoré ou un groupement : -(O-CF₂-CF₂)ₙ-OR_{f}, -(O-CF₂-CF(CF₃)ₙ-OR_{f}, -(O-CF(CF₃)-CF₂)ₙ-OR_{f} ou -(O-CF₂-CF₂-CF₂)ₙ-OR_{f}, où n et R_{f} sont tels que définis précédemment et m est un entier compris entre 1 et 20,
- A représente :
   a) une liaison chimique simple, ou
   b) une fonction -O-, -S- ou -NH-, et
- R₁, R₂, R₃, R₄ et R₅ sont tels que définis précédemment, ainsi que leurs sels toxicologiquement acceptables.

Tous ces composés bisphosphoniques fluorés sont par exemple décrits dans la demande de brevet n° EP 2 054 165, tout comme leur procédé de préparation.

Selon une caractéristique particulière de l'invention, le composé bisphosphonique fluoré répond à la formule développée suivante : 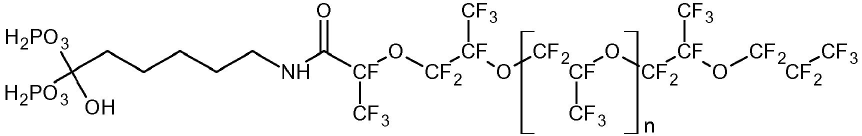 dans laquelle n= 1 ou n= 2.

Les « sels toxicologiquement acceptables » visés dans la présente invention sont notamment les sels de sodium ou de potassium, les sels de calcium ou de magnésium, ou les sels formés par des ligands organiques appropriés tels que des sels d'ammonium. Les sels sont donc de préférence choisis parmi les sels de sodium, de potassium, de magnésium, de calcium, et d'ammonium.

Selon une autre caractéristique de l'invention, le composé bisphosphonique fluoré est présent à une concentration molaire comprise entre 0,01 et 50 mmol/L, préférentiellement entre 0,05 et 5 mmol/L, encore plus préférentiellement entre 0.05 et 2mmol/L. Il est également possible d'utiliser le composé bisphosphonique fluoré à une concentration comprise entre 0.1 et 1mmol/L, comme en témoigne les exemples 6 et 7 ci-dessous.

L'invention concerne également l'utilisation des compositions décrites ci-dessus pour augmenter les propriétés lipophobes et pour limiter l'étalement des lubrifiants sur une surface, comme par exemple des huiles.

Une autre caractéristique de l'invention concerne l'utilisation des compositions décrites ci-dessus pour augmenter les propriétés hydrophobes et pour limiter l'étalement de solutions aqueuses sur une surface.

Une autre caractéristique de l'invention concerne également l'utilisation des compositions décrites ci-dessus pour limiter l'étalement et la fixation des hydrocarbures sur une surface.

L'invention englobe également un procédé de recouvrement de la surface d'une pièce par une couche de fonctionnalisation permettant d'améliorer les propriétés hydrophobes, lipophobes et anti hydrocarbure de ladite surface, caractérisé en ce qu'il comprend les étapes successives suivantes :
a) le cas échéant, oxydation préalable de la surface de la pièce. Cette étape pourra notamment être réalisée sur des matières polymériques comme du polycarbonate ou du polyéthylène ainsi que sur des surfaces en silicium pour augmenter la réactivité de la surface vis-à-vis du bisphosphonate. L'oxydation de la surface pourra, par exemple, être réalisée par un traitement plasma, corona ou UV-ozone.
b) mise en contact de la surface de la pièce avec une composition liquide de recouvrement telle que décrite ci-dessus, jusqu'à assemblage des composés bisphosphoniques qu'elle contient en une couche recouvrant ladite surface,
c) séchage de la surface de la pièce ainsi recouverte, de préférence à l'air ambiant, avec ou sans soufflerie.

Selon une caractéristique dudit procédé, la mise en contact de la surface de la pièce avec ladite composition liquide s'effectue par pulvérisation, spin-coating, essuyage, tamponnage, trempage, dip-coating, flow-coating, enduction laminaire.

Selon une autre caractéristique de ce procédé de recouvrement, la mise en contact de la composition de recouvrement avec la surface de la pièce est réalisée par trempage de la pièce dans une solution contenant entre 0,001 % et 5% (w/w) de composés bisphosphoniques fluorés pendant un temps compris entre 1 seconde et 10 minutes, à température ambiante.

De préférence, le temps de trempage de la pièce dans la solution est compris entre 1 seconde et une minute, par exemple compris entre 5 secondes et 30 secondes (inclus). Ces durées ont en effet été testées avec succès dans le cadre des essais présentés ci-dessous (cf. exemples 4, 5 et 6).

De préférence, ce procédé ne contient aucune étape de chauffage ou de déshydratation. De manière encore plus préférée, il se réalise à température ambiante.

Selon une autre caractéristique de ce procédé de recouvrement, une étape supplémentaire de rinçage est effectuée par aspersion ou immersion dans un solvant et en particulier dans un alcool ou dans un solvant fluoré, de préférence identique au solvant présent dans la composition liquide de recouvrement, entre l'étape b) et l'étape c) ou après l'étape c).

Selon une autre caractéristique dudit procédé de recouvrement, ladite pièce est une pièce en matériau métallique en particulier à base de fer, titane, cuivre, aluminium, nickel, étain ou bien un alliage de ces métaux, en particulier les aciers, les aciers carbones, l'acier 20AP, les aciers inoxydables, le laiton, le maillechort, le bronze, l'étain-nickel, le nickel-phosphore et le cuivre béryllium.

Selon une autre caractéristique de ce procédé de recouvrement, ladite pièce est composée de matériaux minéraux et/ou des céramiques, tels que le verre, le silicium, le rubis, le saphir.

Selon une autre caractéristique de ce procédé de recouvrement, ladite pièce est composée de matériaux dans un état d'oxydation réduit ou faiblement oxydé comme certains métaux nobles, or, argent, rhodium.

Selon une autre caractéristique de ce procédé de recouvrement, ladite pièce est composée de matériaux composites et/ou polymères thermoplastiques ou thermodurcissables, ou un matériau hybride tel que la plastoferrite.

Selon une caractéristique de l'invention, ladite pièce est fonctionnalisée et susceptible d'être obtenue par la mise en œuvre dudit procédé.

Selon une autre caractéristique de l'invention, il s'agit d'une pièce d'un mécanisme ou d'un dispositif intégré dans un article d'horlogerie, dans un objet micromécanique, mécatronique, dans un dispositif médical, dans un circuit imprimé, dans une carte électronique, dans un connecteur microélectronique, dans un système de micro ou macrofluidique, dans des systèmes optiques ou optroniques, sur des instruments de mesures.

Etonnamment, des compositions selon l'invention contenant des molécules bisphosphoniques dans un solvant ou dans un mélange de solvants non inflammables fluorés ne présentent pas les mêmes propriétés que celles obtenues avec les mêmes composés bisphosphoniques utilisés dans un solvant ne contenant pas de solvant fluoré. De telles formulations permettent d'apporter les propriétés hydrophobes et oléophobes sur des matériaux qui ne l'autorisaient pas initialement comme les matériaux non oxydés ou faiblement oxydés tels que l'or et le rhodium, les matières polymériques, thermoplastiques, thermodurcissables.

Tout aussi étonnamment, la stabilité de ce revêtement est accrue par la nature même du mélange solvant fluoré / bisphosphonate fluoré sur ces matériaux ce qui le rend plus résistant à certains lavages.

Du point de vue du procédé, le gain est également important puisque le greffage du revêtement se fait rapidement, l'évaporation du solvant est rapide et, comme le solvant est non inflammable, la composition peut être pulvérisée sur les surfaces et exploitée dans des systèmes automatisés à haut débit et non ATEX.

### EXEMPLES

### Exemple 1 : Revêtement de pièces métalliques par différents composés bisphosphoniques PFPE hydrophobes et oléophobes dans un solvant fluoré

Les molécules décrites ci-dessous ont été mises en solution à 0.2 mM dans un mélange de solvant fluoré HFC-365mfc et d'isopropanol (IPA) dans un rapport volumique 99/1.

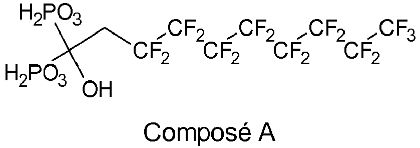

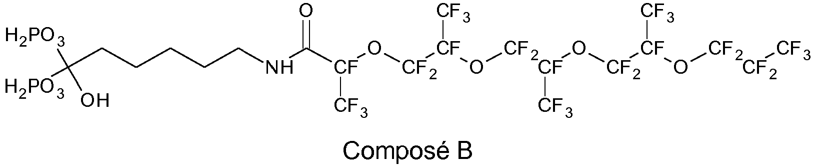

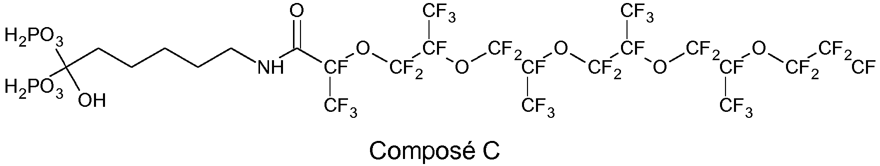

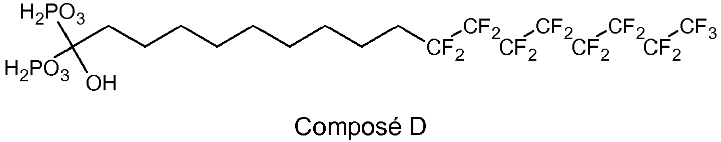

Les solutions ainsi préparées ont servi au revêtement de surface de pièces en acier inoxydable 316L, rhodium, nickel or et rubis.

La modification de surface par les composés bisphosphoniques est évaluée par mesure d'angles de contact (AC) avant et après traitement avec l'huile Moebius 941 et avec l'hexadécane.

| Huile | (AC) avant traitement | (AC) après traitement | | | |
|---|---|---|---|---|---|
| | | Composé A | Composé B | Composé C | Composé D |
| Inox 316L | 11° ± 0° | 70° ± 0° | 79° ± 2° | 81° ± 2° | 72° ± 4° |
| Rhodium | 12° ± 3° | 66° ± 3° | 83° ± 0° | 71° ± 4° | 62° ± 6° |
| Nickel | 9° ± 0° | 72° ± 2° | 82° ± 0° | 85° ± 1° | 73° ± 0° |
| Rubis | 14° ± 0° | 71° ± 1° | 80° ± 1° | 81° ± 0° | 76° ± 0° |
| Au | 10° ± 2° | 77° ± 0° | 83° ± 0° | 90° ± 3° | 78° ± 1° |

| Hexadécane | (AC) avant traitement | (AC) après traitement | | | |
|---|---|---|---|---|---|
| | | Composé A | Composé B | Composé C | Composé D |
| Inox 316L | < 10° | 59° ± 4° | 71° ± 1° | 80° ± 1° | 62° ± 3° |
| Rhodium | < 10° | 65° ± 1° | 74° ± 1° | 86° ± 0° | 64° ± 5° |
| Nickel | < 10° | 62° ± 0° | 75° ± 0° | 83° ± 1° | 66° ± 1° |
| Rubis | < 10° | 64° ± 1° | 77° ± 0° | 70° ± 2° | 67° ± 6° |
| Au | < 10° | 70° ± 0° | 76° ± 0° | 85° ± 1° | 72° ± 1° |

Les angles de contact sont similaires quelle que soit la solution utilisée. Les surfaces traitées sont toutes oléophobes. Toutes ces molécules apportent aux surfaces traitées des propriétés oléophobes et anti hydrocarbures.

Les molécules B et C, dissoutes dans des solvants fluorés seuls, ont conduit à des résultats de traitement de surface similaires.

Parmi les autres solvants utilisés, nous pouvons citer :

| Type de Solvant fluoré | Formule brute | Nom commercial | Pourcentage volumique |
|---|---|---|---|
| HFE | C₄F₉OCH₃ | HFE 7100 | 100% |
| HFE | C₄F₉OC₂H₅ | HFE 7200 | 100% |
| HFO | C₅F₁₁-CF=CF-OCH₃ | HFO Vertrel Suprion | 100% |

Pour des composés comme les molécules A et D, la présence d'isopropanol est recommandée car elle améliore sensiblement la solubilisation dans ces mêmes solvants.

### Exemple 2 : Revêtement de pièces métalliques oxydées par une molécule bisphosphonique PFPE hydrophobe et oléophobe solubilisée dans différents solvants fluorés

Le tableau suivant récapitule les familles de solvants utilisées pour ces essais de solubilisation.

| Type de Solvant fluoré | Formule brute | Nom commercial | Pourcentage volumique |
|---|---|---|---|
| HFE | C₄F₉OCH₃ | HFE 7100 | 100% |
| HFE | C₄F₉OC₂H₅ | HFE 7200 | 100% |
| HFC | CH₃CF₂CH₂CF₃ | HFC 365mfc | 99% (+1% isopropanol) |
| HFO | C₅F₁₁-CF=CF-OCH₃ | HFO Vertrel Suprion | 100% |

Pour chacun des mélanges solvant/molécule testés, la limpidité après dilution et au cours du temps a été validée.

Les différentes solutions obtenues ont servi à réaliser le revêtement de différents matériaux comme décrit ci-après..

### a. Traitement par le composé C dans un mélange HFC-365 mfc et isopropanol

Des pièces nickelées, en inox 316L et en acier 20AP ont été traitées par le protocole suivant :
- Les pièces sont nettoyées par un solvant organique ou une solution lessivielle en phase aqueuse puis séchées à l'air.
- Les pièces sont immergées 30 secondes dans une solution de composé C à 0.2 mM dans un mélange de d'isopropanol et de HFC-365 mfc.
- Les pièces sont ensuite séchées à l'air ambiant.

### b. Traitement par le composé C dans HFE-7100

De même, des pièces en inox 316L et en acier 20AP ont été traitées par le protocole suivant :
- Les pièces sont nettoyées par un solvant organique ou une solution lessivielle en phase aqueuse puis séchées à l'air.
- Les pièces sont immergées 30 secondes dans une solution de composé C à des concentrations comprises entre 0.2 et 5 mM dans le solvant HFE7100.
- Les pièces sont sorties et séchées à l'air libre.

### c. Traitement par le composé C dans le solvant HFE-7200

De même, des pièces en inox 316L, en acier 20AP et des rubis ont été traitées par le protocole suivant :
- Les pièces sont nettoyées par un solvant organique ou une solution lessivielle en phase aqueuse puis séchées à l'air.
- Les pièces sont immergées 30 secondes dans des solutions de composé C à des concentrations comprises entre 0.2 et 5 mM dans le solvant HFE7200.
- Les pièces sont sorties et séchées à l'air libre

### d. Traitement par le composé C dans le solvant HFO Vertrel Suprion

Des pièces nickelées, en inox 316L, en acier 20AP et des rubis ont été traitées par le protocole suivant :
- Les pièces sont nettoyées par un solvant organique ou une solution lessivielle en phase aqueuse puis séchées à l'air.
- Les pièces sont immergées 30 secondes dans une solution de composé C à des concentrations comprises entre 0.2 et 5 mM dans du HFO Vertrel Suprion.
- Les pièces sont sorties et séchées à l'air ambiant

La modification de surface par les composés gem-bisphosphoniques est évaluée par mesure d'angle de contact (AC) avec l'huile Moebius 941.

| | (AC) avant traitement | (AC) après traitement | | | |
|---|---|---|---|---|---|
| | | HFC-365 mfc + IPA | HFE 7100 | HFE 7200 | HFO Vertrel Suprion |
| Nickel | 9° ± 0° | 85° ± 1° | nr | 86° ± 1° | 85° ± 1° |
| Inox 316L | 11° ± 0° | 81° ± 2° | 68° ± 1° | 84° ± 2° | 84° ± 1° |
| Acier 20AP | 12° ± 3° | 78° ± 3° | 73° ± 2° | 85° ± 2° | 82° ± 4° |
| Rubis | 14° ± 0° | 86° ± 2° | *nr* | *nr* | 83° ± 2° |

Les angles de contact sont similaires quelle que soit la solution utilisée. Les surfaces ainsi traitées sont toutes oléophobes.

### Exemple 3 : Revêtement de pièces métalliques non oxydées

Des pièces de laiton doré et de laiton rhodié ont été traitées par le composé C en solution dans différents solvants fluorés selon les protocoles décrits dans les exemples 2.a. à 2.d.

La modification de surface par les composés gem-bisphosphoniques est évaluée par mesure d'angle de contact avec une huile horlogère Moebius 941.

| | (AC) avant traitement | (AC) après traitement | | | |
|---|---|---|---|---|---|
| | | HFC 365 mfc + IPA | HFE 7100 | HFE 7200 | HFO Vertrel Suprion |
| or | 10° ± 2° | 90° ± 3° | 55° ± 1° | 84° ± 1° | 85° ± 1° |
| rhodium | 12° ± 3° | 71° ± 4° | 79° ± 3° | 84° ± 1° | 85° ± 1° |

Les surfaces ainsi traitées sont toutes oléophobes.

### Exemple 4 : Influence du temps de trempage dans HFC-365mfc + IPA

Des pièces de laiton doré, de laiton rhodié, d'acier 20AP et d'inox 316L ont été traitées par la molécule C en solution dans un mélange d'alcool et de HFC-365 mfc. Trois temps de trempage ont été testés : 5 secondes, 30 secondes et cinq minutes. Les angles de contact avec une huile horlogère ont été mesurés après traitement.

| | AC après un trempage de 5 secondes | AC après un trempage de 30 secondes | AC après un trempage de 5 minutes |
|---|---|---|---|
| Laiton doré | 81° ± 0° | 82° ± 0° | 85° ± 1° |
| Laiton rhodié | 82° ± 1° | 84° ± 1° | 84° ± 1° |
| Ni | 83° ± 0° | 83° ± 1° | 83° ± 1° |
| Inox 316L | 80° ± 0° | 82° ± 0° | 80° ± 1° |

Dans les conditions testées, le temps de trempage n'a pas d'influence sur la qualité du revêtement de surface.

### Exemple 5 : Comparaison d'un traitement par le composé C solubilisé dans l'alcool isopropylique, avec des traitements par le composé C solubilisé dans différents solvants fluorés.

Des pièces nickelées, dorées, rhodiées, d'acier 20AP et d'inox 316L ont été traitées par des solutions à 0.2 mmol/L du composé C selon les protocoles de l'exemple 2.a, 2.c. et 2.d. Des pièces ont également été traitées par le composé C en solution dans l'isopropanol à 2 mmol/L selon le protocole suivant, couramment utilisé dans l'industrie horlogère :
- Les pièces sont nettoyées par un solvant organique ou une solution lessivielle en phase aqueuse puis séchées à l'air libre,
- Les pièces sont immergées dans la solution de composé C dans l'isopropanol pendant 5 minutes,
- Les pièces sont immergées dans un bécher d'isopropanol pendant 60 secondes,
- Les pièces sont sorties et immergées dans la solution de composé C dans l'isopropanol pendant 5 minutes,
- Les pièces sont sorties et immergées dans un bécher d'isopropanol pendant 60 secondes,
- Les pièces sont égouttées et séchées à l'air chaud.

Les angles de contact avec une huile horlogère sont alors mesurés.

| Solvant | Isopropanol | HFC-365 mfc + IPA | HFO Vertrel Suprion | HFE-7200 |
|---|---|---|---|---|
| Or | 85° ± 2° | 85° ± 6° | 85° ± 1° | 84° ± 1° |
| Rhodium | 79° ± 3° | 69° ± 5° | 86° ± 1° | 84° ± 1° |
| Acier 20AP | 74° ± 1° | 81° ± 4° | 82° ± 2° | 85° ± 1° |
| Inox 316L | 67° ± 6° | 82° ± 2° | 82° ± 3° | 84° ± 2° |
| Nickel | 80° ± 5° | 82° ± 3° | 86° ± 1° | 86° ± 1° |
| Rubis | 62° ± 2° | 86° ± 2° | 82° ± 1° | nr |

Sur ces matériaux, les résultats de mesure d'angles de contact avec l'huile Moebius 941 après traitement sont comparables pour toutes les solutions.

En revanche, le protocole dans l'isopropanol demande environ 15 minutes tandis que le temps de traitement dans le HFO Vertrel Suprion, le HFE-7200 ou le HCF-365 mfc + IPA est d'une minute. Le gain de temps très important résulte en particulier du fait que la présente invention implique de façon avantageuse, l'utilisation d'un seul bain de trempage, alors qu'en cas d'utilisation de composés bisphosphonate fluorés dans l'isopropanol, quatre bains de trempage s'avèrent nécessaires.

Par ailleurs, la concentration en molécule C utilisée pour la solution dans l'isopropanol est 10 fois plus élevée que celle dans les solvants fluorés.

### Exemple 6 : Comparaison d'un traitement par le composé C solubilisé dans l'alcool isopropylique, avec des traitements par le composé C solubilisé dans différents solvants fluorés à concentrations égales.

Des pièces nickelées, dorées, rhodiées, d'acier 20AP et d'inox 316L ont été traitées par des solutions à 0.2 mmol/L du composé C dans le HFO Vertrel Suprion ou en solution dans l'isopropanol à 0.2 mmol/L. Les pièces ont été immergées dans ces deux solutions pendant 30 secondes ou une heure. Une fois les pièces séchées, les angles de contact ont été mesurés avec une huile horlogère et avec l'hexadécane.

| AC Huile | Isopropanol | | HFO Vertrel Suprion | |
|---|---|---|---|---|
| Temps de trempage | 0.5 min | 60 min | 0.5 min | 60 min |
| Laiton doré | 63° ± 15° | 66° ± 1° | 81° ± 0° | 82° ± 0° |
| Laiton rhodié | 62° ± 11° | 54° ± 6° | 82° ± 0° | 82° ± 1° |
| Inox 316L | 45° ± 2° | 59° ± 1° | 81° ± 1° | 79° ± 1° |
| Nickel | 56° ± 1° | 66° ± 1° | 82° ± 0° | 81° ± 0° |

| AC Hexadécane | Isopropanol | | HFO Vertrel Suprion | |
|---|---|---|---|---|
| Temps de trempage | 0.5 min | 60 min | 0.5 min | 60 min |
| Laiton doré | 61° ± 10° | 70° ± 2° | 76° ± 1° | 76° ± 0° |
| Laiton rhodié | 49° ± 13° | 48° ± 6° | 76° ± 0° | 76° ± 0° |
| Inox 316L | 34° ± 1° | 49° ± 1° | 75° ± 0° | 78° ± 1° |
| Nickel | 43° ± 3° | 58° ± 1° | 75° ± 1° | 77° ± 1° |

Ces résultats montrent que les AC obtenus sur les surfaces traitées avec la molécule C dissoute dans un solvant fluoré sont, dans tous les cas, significativement supérieurs à ceux obtenus avec la même molécule dissoute dans l'IPA, dans des conditions de concentration et de durée de trempage identiques.

Les angles de contact obtenus pour les matériaux revêtus avec la solution dans l'IPA sont variables selon la durée de trempage et selon le matériau utilisé. Les angles de contact obtenus pour les matériaux revêtus avec la solution dans le HFO sont indépendants de la durée de trempage. Leur variabilité est faible. Le revêtement de surface avec la solution HFO est plus robuste et plus performant que celui utilisant la solution dans l'IPA.

### Exemple 7 : Influence de la concentration de la solution traitante lorsque la molécule est dissoute dans un solvant fluoré

### 7-a Solution dans le HFO Vertrel Suprion

Des pièces de laiton doré, de laiton rhodié, de nickel et d'acier inoxydable 316L ont été traitées par immersion de 30 secondes par la molécule C en solution dans le solvant HFO Vertrel Suprion à trois concentrations: 0.2 mM, 0.4 mM et 1 mM. Les angles de contact avec une huile horlogère ont été mesurés après traitement.

| AC Huile | Concentration totale en molécule C | | |
|---|---|---|---|
| | 0.2 mM | 0.4mM | 1 mM |
| Laiton doré | 85° ± 1° | 85° ± 1° | 92° ± 2° |
| Laiton rhodié | 86° ± 0° | 84° ± 0° | 92° ± 1° |
| Ni | 83° ± 1° | 86° ± 1° | 78° ± 1° |
| Inox 316L | 80° ± 1° | 84° ± 0° | 86° ± 1° |

Quelle que soit la concentration testée, les pièces traitées ont un caractère oléophobe très marqué.

### 7-b Solution dans un mélange d'alcool et de HFC-365 mfc

Des pièces d'inox 316L ont été traitées par immersion de 30 secondes dans une solution de la molécule C dans un mélange d'alcool et de HFC-365mfc à 0.2 mM et à 2 mM. Les angles de contact (AC) avec une huile horlogère et avec l'hexadécane ont été mesurés après traitement.

| | Concentration totale en molécule C | |
|---|---|---|
| | 0.2 mM | 2 mM |
| AC huile horlogère | 82° ± 0° | 91° ± 1° |
| AC hexadécane | 73° ± 4° | 78° ± 2° |

Pour les deux concentrations, les pièces traitées ont peu d'affinité avec une huile ou un hydrocarbure tel que l'hexadécane.

### Exemple 8 : Résistance au lavage à l'isopropanol

Des pièces nickelées, en laiton doré, en laiton rhodié, en acier 20AP et en inox 316L ont été traitées par le composé C selon le protocole l'exemple 2.a. Ces pièces ont subi cinq cycles de lavage à l'isopropanol. Chaque cycle est composé comme suit :
- deux minutes d'immersion dans un bain d'isopropanol en présence d'ultrasons, (2 répétitions)
- deux minutes d'immersion dans un nouveau bain d'isopropanol sans ultrason (2 répétitions)

Les angles de contact (AC) à l'huile horlogère au terme des cinq cycles sont mesurés après traitement par la solution de molécule C puis après lavage des mêmes pièces.

| | (AC) après traitement par la molécule C | (AC) après 5 cycles de nettoyage à l'isopropanol |
|---|---|---|
| or | 90° ± 3° | 83° ± 6° |
| rhodium | 71° ± 4° | 66° ± 5° |
| Nickel | 85° ± 1° | 77° ± 3° |
| Inox 316L | 81° ± 2° | 69° ± 3° |
| Acier 20AP | 78° ± 3° | 76° ± 3° |

Les résultats montrent que le traitement par les composés gem-bisphosphoniques est stable sur tous les matériaux testés après 5 cycles de lavage à l'isopropanol.

### Exemple 9: Résistance après lavage lessiviel en phase aqueuse.

Des pièces nickelées, en laiton doré, en laiton rhodié, en acier 20AP et en inox 316L ont été traitées par le composé C selon le protocole l'exemple 2.a. Ces pièces ont subi un cycle de lavage lessiviel en phase aqueuse composé des étapes suivantes :
- Trois minutes dans un bain de lessiviel en phase aqueuse à 5 % à 60°C en présence d'ultrasons
- Trois minutes dans un bain de lessiviel en phase aqueuse à 4 % à 60°C en présence d'ultrasons
- Deux minutes dans un bain d'eau dure à température ambiante
- Trois minutes dans un bain de lessiviel en phase aqueuse à 3 % à 60°C en présence d'ultrasons
- Rinçage et séchage des pièces

Les angles de contact (AC) avec l'huile horlogère sont mesurés après traitement par la molécule C puis au terme du cycle de nettoyage.

| | (AC) après traitement | (AC) après un cycle de nettoyage lessiviel |
|---|---|---|
| Laiton doré | 83° ± 5° | 46° ± 11° |
| Laiton rhodié | 66° ± 5° | 51° ± 17° |
| Nickel | 81° ± 2° | 71° ± 5° |
| Inox 316L | 83° ± 2° | 73° ± 1° |
| Acier 20AP | 83° ± 2° | 66° ± 7° |

Malgré une baisse des angles de contact, les matériaux présentent encore un caractère oléophobe marqué puisque les angles sont supérieurs à 45°, limite inférieure acceptable pour la propriété lipophobe par l'homme de l'art.

### Exemple 10 : Résistance après lavages à la benzine

Des pièces nickelées, en laiton doré, en laiton rhodié, en acier 20AP, en inox 316L et des rubis ont été traitées par le composé C selon le protocole l'exemple 2.a. Ces pièces ont subi cinq cycles de lavage à la benzine rectifiée (éther de pétrole).

Chaque cycle est composé comme suit :
- Immerger les pièces dans la solution de benzine rectifiée pendant 2 min aux ultrasons,
- Immerger les pièces dans une nouvelle solution de benzine rectifiée pendant 2 min à température ambiante,
- Sécher les pièces sous flux d'air froid.

Les angles de contact (AC) avec l'huile horlogère sont mesurés après traitement par la molécule C puis au terme des 5 cycles de nettoyage.

| | (AC) après traitement | (AC) après 5 cycles de nettoyage à la benzine rectifiée |
|---|---|---|
| Laiton doré | 85° ± 1° | 74° ± 1° |
| Laiton rhodié | 84° ± 2° | 71° ± 2° |
| Nickel | 85° ± 1° | 72° ± 4° |
| Inox 316L | 83° ± 0° | 70° ± 1° |
| Acier 20AP | 71° ± 1° | 64° ± 4° |
| Rubis | 72° ± 3° | 68° ± 3° |

Les matériaux traités par les composés gem-bisphosphoniques en solution dans un solvant fluoré conservent leurs propriétés oléophobes après cinq cycles de nettoyage avec cet hydrocarbure.

### Exemple 11 : Résistance après lavages au pentane

Des pièces nickelées, en laiton doré, en laiton rhodié, en inox 316L, en 20AP et des rubis ont été traitées par le composé C selon le protocole l'exemple 2.a. Ces pièces ont subi cinq cycles de lavage avec un mélange d'isomères de pentane.

Chaque cycle est composé comme suit :
- Immerger les pièces dans le pentane pendant 2 min aux ultrasons,
- Immerger les pièces dans un nouveau bain de pentane pendant 2 min à température ambiante,
- Sécher les pièces sous flux d'air froid.

Les angles de contact (AC) avec l'huile horlogère sont mesurés après traitement par la molécule C puis au terme des 5 cycles de nettoyage.

| | (AC) après traitement | (AC) après 5 cycles de nettoyage au pentane |
|---|---|---|
| Laiton doré | 84° ± 1° | 78° ± 5° |
| Laiton rhodié | 84° ± 1° | 77° ± 2° |
| Nickel | 84° ± 1° | 79° ± 2° |
| Inox 316L | 83° ± 1° | 74° ± 3° |
| 20AP | 82° ± 2° | 71° ± 1° |
| Rubis | 82° ± 1° | 72° ± 3° |

Les matériaux traités par les composés gem-bisphosphoniques en solution dans un solvant fluoré conservent leurs propriétés oléophobes après cinq cycles de nettoyage avec cet hydrocarbure.

### Exemple 12 : Traitement de matières plastiques par un composé gem-bisphosphonique PFPE par immersion.

Des pièces plastiques en PU (polyuréthane), POM (polyoxyméthylène), PMMA (polyméthylméthacrylate), et PC (polycarbonate), ont été nettoyées à l'isopropanol. Elles ont ensuite été traitées par une solution à 0,2 mmol/L du composé C dans le solvant HFE-7200. D'autres pièces ont également été traitées par une solution à 0,2 mmol/L du composé C dans l'isopropanol.

Pour tous ces matériaux, les pièces sont immergées 30 secondes dans ces solutions puis séchées à l'air libre.

La modification de la surface a été évaluée par mesure d'angle de contact (AC) d'une goutte d'huile horlogère ou d'hexadécane.

| AC huile horlogère | (AC) avant traitement | (AC) après traitement Solvant IPA | (AC) après traitement Solvant HFE-7200 |
|---|---|---|---|
| PU | 17° | 50° ± 7° | 81° ± 1° |
| POM | 25° | 48° ± 5° | 74° ± 4° |
| PMMA | 8° | 36° ± 16° | 70° ± 7° |
| PC | 8° | 33° ± 7 | 80° ± 1° |

| AC hexadécane | (AC) avant traitement | (AC) après traitement Solvant IPA | (AC) après traitement Solvant HFE-7200 |
|---|---|---|---|
| PU | 7° | 53° ± 1° | 69° ± 4° |
| POM | < 10° | 40° ± 4° | 72° ± 2° |
| PMMA | 17° | 45° ± 3° | 71° ± 2° |
| PC | 10° | 49° ± 2° | 73° ± 1° |

Les angles de contact avec l'huile ou l'hexadécane sont nettement plus élevés sur les plastiques traités par la molécule C dans le HFE 7200 que ceux sur les plastiques traités avec la molécule C dans l'isopropanol.

Toutes les matières plastiques traitées par les composés gem-bisphosphoniques en solution dans le HFE 7200 présentent des propriétés oléophobes marquées et une faible affinité pour les hydrocarbures.

Néanmoins la compatibilité chimique de certains solvants fluorés rend délicat le traitement de certaines matières polymériques. Il conviendra à l'homme du métier de choisir un solvant fluoré compatible avec le matériau afin qu'il n'entraine pas de dégradation de ce matériau lors de son traitement par une composition contenant un composé bisphosphonique.

### Exemple 13 : Traitement de matières plastiques par un composé bisphosphonique PFPE par pulvérisation

Des pièces plastiques en ABS, Nylon, PU, POM, PMMA, PC, PET, plastoferrite et PBT (polytéréphtalate de butylène) ont été nettoyées à l'isopropanol. Les pièces ont été traitées par une solution de composé C à 0.2 mmol/L dans le solvant HFE 7200 ou dans le mélange de solvant fluoré HFC-365mfc et d'isopropanol dans un rapport volumique 99/1. Ces solutions ont été pulvérisées sur les pièces à l'aide d'un atomiseur en position verticale. Les échantillons sont séchés à l'air libre.

La modification de la surface a été évaluée par mesure d'angle de contact (AC) d'une goutte d'huile horlogère et d'hexadécane.

| AC huile horlogère | (AC) avant traitement | (AC) après traitement Solvant HFC-IPA | (AC) après traitement Solvant HFE |
|---|---|---|---|
| ABS | < 5° | 63° ± 7° | 83° ± 1° |
| Nylon | 15° | 62° ± 6° | 80° ± 3° |
| PU | 14° | 67° ± 5° | 83° ± 1° |
| POM | 22° | 53° ± 5° | 73° ± 2° |
| PMMA | 8° | nr | 68° ± 3° |
| PC | 8° | nr | 56° ± 7° |

| AC hexadécane | (AC) avant traitement | (AC) après traitement Solvant HFC-IPA | (AC) après traitement Solvant HFE |
|---|---|---|---|
| ABS | 18° | 58° ± 4° | 76° ± 1° |
| Nylon | 15° | 66° ± 4° | 74° ± 1° |
| PU | 7° | 59° ± 2° | 74° ± 1° |
| POM | < 10° | 51° ± 4° | 75° ± 3° |
| PMMA | 8° | nr | 70° ± 2° |
| PC | 8° | nr | 73° ± 2° |
| PET | 8° | nr | 76° ± 1° |
| Plastoferrite | < 5° | nr | 72° ± 2° |
| PBT | 3° | nr | 73° ± 4° |

De façon similaire à l'exemple 12, le traitement par la molécule C en solution dans le HFE 7200 et dans une moindre mesure en solution dans le solvant HFC+IPA ont permis de rendre les matières plastiques testées oléophobes : les surfaces ainsi traitées ont une faible affinité pour les hydrocarbures et les huiles.

Les angles de contact sur les plastiques traités avec la molécule C en solution dans les solvants fluorés sont plus élevés que ceux sur les plastiques traités avec la molécule C dans l'isopropanol (données non fournies).

### Exemple 14 : Traitement de métaux par pulvérisation

De façon à pouvoir traiter des pièces par pulvérisation à haut débit dans des conditions industrielles, il est utile de disposer d'une solution qui soit non inflammable et relativement volatile.

Sur des pièces en acier inoxydable 316L et en or en position verticale, des solutions du composé C (0.2mM) dissoutes dans un azéotrope du HFC-365 mfc en mélange avec un alcool, ou dans le solvant HFE 7200 ont été pulvérisées sur les échantillons à l'aide d'un pistolet à peinture.

La modification de la surface a été évaluée par mesure d'angle de contact (AC) de gouttes d'eau et d'hexadécane.

| AC H2O | avant traitement | après traitement Solvant HFC + IPA | après traitement Solvant HFE |
|---|---|---|---|
| Inox 316L | 64° ± 2° | 100° ± 2° | 107° ± 1° |
| Or | 50° ± 12° | 88° ± 6° | 93° ± 0° |

| AC Hexadécane | avant traitement | après traitement Solvant HFC + IPA | après traitement Solvant HFE |
|---|---|---|---|
| Inox 316L | <5 ° | 82° ± 1° | 73° ± 2° |
| Or | 6° ± 6° | 75° ± 3° | 74° ± 3° |

Le caractère hydrophobe, lipophobe et anti-hydrocarbures des surfaces est augmenté par le dépôt de la molécule C dissoute dans un solvant fluoré.

### Exemple 15 : Comparaison des procédés d'application en fonction des matériaux et des formulations utilisés.

Des pièces en inox 316L, en plastoferrite et en polytéréphtalate d'éthylène (PET) ont été nettoyées à l'isopropanol.

Des solutions du composé C (0.2mM) ont été préparées soit dans un azéotrope du HFC-365 mfc en mélange avec un alcool, dans le solvant HFO Vertrel Suprion ou dans le solvant HFE-7200.

Ces solutions ont ensuite été soit :
- pulvérisées sur les échantillons en se plaçant à 10 cm de la surface, en position verticale, suivi d'un séchage à l'air libre.
- Appliquées par enduction au pinceau, suivi d'un séchage à l'air libre.
- Appliquées par trempage selon le protocole décrit à l'exemple 2

La modification de la surface a été évaluée par mesure d'angle de contact (AC) de gouttes d'huile horlogère et d'hexadécane.

| AC huile horlogère | | avant revêtement | après revêtement par pulvérisation | après revêtement au pinceau | Après traitement par trempage |
|---|---|---|---|---|---|
| HFC-365mfc + IPA | Inox 316L plasto ferrite PET | 8° | 82° | 79° | 79° |
| | | 54° | 91° | 84° | 84° |
| | | 20° | 71° | 54° | 83° |
| HFO Vertrel Suprion | Inox 316L plasto ferrite PET | 8° | 77° | 77° | 84° |
| | | 56° | 95° | 95° | 91° |
| | | 20° | 80° | 78° | 78° |
| HFE-7200 | Inox 316L plasto ferrite PET | 8° | 82° | 80° | 84° |
| | | 56° | 98° | 95° | 97° |
| | | 20° | 75° | 77° | 80° |

Les écarts types sont inférieurs ou égaux à 5°

| AC hexadécane | | avant revêtement | après revêtement par pulvérisation | après revêtement au pinceau | Après traitement par trempage |
|---|---|---|---|---|---|
| HFC-365mfc + IPA | Inox 316L plasto ferrite PET | < 5° | 79° | 74° | 70° |
| | | 30° | 74° | 68° | 68° |
| | | < 5° | 68° | 67° | 70° |
| HFO Vertrel Suprion | Inox 316L plasto ferrite PET | <5° | 73° | 69° | 76° |
| | | 30° | 82° | 76° | 88° |
| | | < 5° | 77° | 61° | 75° |
| HFE-7200 | Inox 316L plasto ferrite PET | < 5° | 77° | 71° | 76° |
| | | 36° | 76° | 76° | 80° |
| | | < 5° | 69° | 74° | 78° |

Les écarts types sont inférieurs ou égaux à 5°

Quel que soit le mode d'application (pulvérisation, enduction ou trempage), et le solvant fluoré, les pièces traitées montrent un caractère lipophobe marqué ainsi qu'une affinité limitée pour les hydrocarbures.

## Revendications

1. Composition liquide **caractérisée en ce qu'**elle contient :
- au moins un composé bisphosphonique porteur d'au moins un groupement partiellement fluoré, perfluoré (PF) ou perfluoropolyéther (PFPE), et **en ce que** ledit composé bisphosphonique est dissous dans
- au moins un solvant non inflammable fluoré, ledit solvant ne présentant pas de point éclair ou présentant un point éclair supérieur à 60°C.

2. Composition selon la revendication 1, **caractérisée en ce que** ledit solvant contient des hydrofluorocarbures (HFC), des hydrofluoro-éthers (HFE), des hydrofluoroléfines (HFO) et des perfluoropolyéthers (PFPE) utilisés seuls ou en mélange.

3. Composition selon la revendication 2, **caractérisée en ce que** :
- les hydrofluorocarbures sont des hydrofluoro-(C₃₋₆) alcanes, en particulier le pentafluorobutane (HFC-365-mfc),
- les hydrofluoro-éthers sont des (C₁₋₄) alkoxy perfluoro-(C₄₋₈) alcanes, en particulier le méthoxy-nonafluorobutane (HFE-7100), l'éthoxy-nonafluorobutane (HFE-7200) et le 1,1,1,2,2,3,4,5,5,5-décafluoro-3-méthoxy-4-terfluorométhyle-pentane (HFE-7300), et
- les hydrofluoroléfines sont celles en C₃ à C₁₀ contenant une seule double liaison éthylénique, en particulier le méthoxy tridécafluoro heptène,
- les perfluoropolyéthers sont des molécules présentant une chaine carbonée perfluorée en C₂ à C₅ entrecoupée d'atomes d'oxygène, en particulier le polymère d'oxyde de perfluoropropylène.

4. Composition selon l'une des revendications 1 à 3, **caractérisée en ce que** ledit solvant contient également un solvant non fluoré.

5. Composition selon la revendication 4, **caractérisée en ce que** ledit solvant se présente sous la forme d'un mélange azéotropique.

6. Composition selon l'une des revendications 1 à 5, **caractérisée en ce que** le composé bisphosphonique répond à la formule générale (I) suivante : 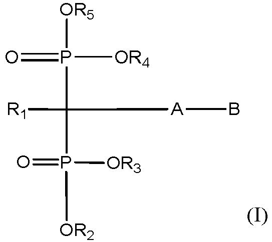 dans laquelle :
- R₂, R₃, R₄, R₅ représentent indépendamment l'un de l'autre un atome d'hydrogène ou un groupe alkyle en C₁-C₁₀, tel que méthyle ou éthyle ; de préférence R₂, R₃, R₄, R₅ sont identiques et représentent un atome d'hydrogène;
- A représente une liaison chimique simple, -O-, -S- ou -NH-, de préférence une liaison chimique simple;
- B représente:
a) une chaîne alkyle en C₁-C₁₀₀, linéaire ou ramifiée, saturée ou non, pouvant être perfluorée ou partiellement fluorée, et pouvant être substituée ou interrompue par 1 à 10 groupements aryles pouvant être perfluorés ou non; ou
b) un groupement -(CH₂)ₘ-X dans lequel m est un entier compris entre 1 et 100 et X est un groupement alkyle en C₁-C₁₀₀ saturé ou non, pouvant être perfluoré ou partiellement fluoré, le groupement alkyle pouvant être substitué ou interrompu par 1 à 10 groupements aryle pouvant être perfluorés ou non;
de préférence B représente un groupement alkyle en C₉-C₂₀ perfluoré ou partiellement fluoré; et
- R₁ représente un atome d'hydrogène ou un groupement -OH, -NH₂, alkyle en C₁-C₁₀₀, pouvant être perfluoré ou partiellement fluoré ; R₁ représente de préférence un groupement -OH,
ainsi que leurs sels toxicologiquement acceptables, choisis parmi les sels de sodium, de potassium, de magnésium, de calcium, et d'ammonium,
ou bien à la formule (I') suivante : 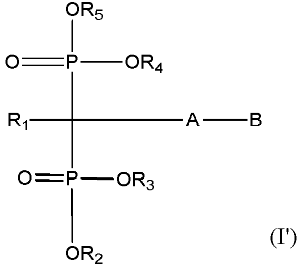 dans laquelle :
- B représente un groupement -(CH₂)ₘ-D-E dans lequel :
- m est un entier compris entre 1 et 100,
- D est une liaison chimique simple ou un groupement -O-, -S-, -OCO-, -COS-,-SCO-, -SCS-, -CONH-, -HNCO-, -HNCO-CF(CF₃)- ou -NH- CO-NH-, -NH-CS-NH-, et
- E est un groupement ; -(O-CF₂-CF₂)ₙ-OR_{f}, -(O-CF₂-CF(CF₃))ₙ-OR_{f}, -(O-CF(CF₃)-CF₂)ₙ-OR_{f} ou -(O-CF₂-CF₂-CF₂)ₙ-OR_{f}, où n est un entier compris entre 1 et 100 et R_{f} est un groupement alkyle perfluoré en C₁-C₁₀, ou bien un groupement : 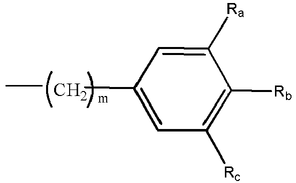 dans lequel, Rₐ, R_{b}, R_{c} représentent indépendamment l'un de l'autre un atome d'hydrogène, un alkyle en C1-C100 perfluoré ou un groupement : -(O-CF₂-CF₂)ₙ-OR_{f}, -(O-CF₂-CF(CF₃)ₙ-OR_{f}, -(O-CF(CF₃)-CF₂)ₙ-OR_{f} ou -(O-CF₂-CF₂-CF₂)ₙ-OR_{f}, où n et R_{f} sont tels que définis précédemment et m est un entier compris entre 1 et 20,
- A représente :
a) une liaison chimique simple, ou
b) une fonction -O-, -S- ou -NH-, et
- R₁, R₂, R₃, R₄ et R₅ sont tels que définis précédemment, ainsi que leurs sels toxicologiquement acceptables choisis parmi les sels de sodium, de potassium, de magnésium, de calcium, et d'ammonium.

7. Composition selon la revendication 6, **caractérisée en ce que** le composé bisphosphonique répond à la formule développée suivante : 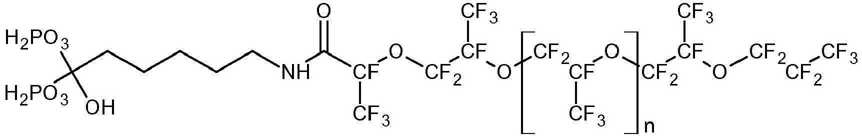 dans laquelle n= 1 ou n= 2.

8. Utilisation des compositions telles que définies dans les revendications 1 à 7, pour augmenter les propriétés lipophobes et pour limiter l'étalement des lubrifiants et des hydrocarbures sur une surface, ou pour augmenter les propriétés hydrophobes et pour limiter l'étalement de solutions aqueuses sur une surface.

9. Procédé de recouvrement de la surface d'une pièce par une couche de fonctionnalisation permettant d'améliorer les propriétés hydrophobes et lipophobes de ladite surface, **caractérisé en ce qu'**il comprend les étapes successives suivantes :
a) le cas échéant, oxydation préalable de la surface de la pièce,
b) mise en contact de la surface de la pièce avec une composition liquide de recouvrement définie par l'une des revendications 1 à 7, jusqu'à assemblage des composés bisphosphoniques qu'elle contient en une couche recouvrant ladite surface,
c) séchage de la surface de la pièce ainsi recouverte, de préférence à l'air ambiant.

10. Procédé de recouvrement selon la revendication 9, **caractérisé en ce que** la mise en contact de la composition de recouvrement avec la surface de la pièce est réalisée par pulvérisation ou trempage de la pièce dans une solution contenant entre 0,001 % et 5% de composés bisphosphoniques, pendant un temps compris entre 1 seconde et 2 minutes, à température ambiante.

11. Procédé de recouvrement selon l'une des revendications 9 ou 10, **caractérisé en ce qu'**une étape supplémentaire de rinçage est effectuée par pulvérisation ou trempage avec un solvant entre l'étape b) et l'étape c).

12. Procédé de recouvrement selon l'une des revendications 9 à 11, **caractérisé en ce que** la pièce est une pièce en matériau métallique, minéraux ou céramique.

13. Procédé de recouvrement selon l'une des revendications 9 à 12, **caractérisé en ce que** la pièce est une pièce en métal noble ayant un état d'oxydation réduit ou faiblement oxydé, ou une pièce en matériau composite et/ou en polymère thermoplastique ou thermodurcissable, ou en matériau hybride.

14. Pièce fonctionnalisée susceptible d'être obtenue par la mise en œuvre du procédé selon l'une des revendications 9 à 13.

15. Pièce selon la revendication 14, **caractérisée en ce qu'**il s'agit d'une pièce d'un mécanisme ou d'un dispositif intégré dans un article d'horlogerie, dans un objet micromécanique, mécatronique, dans un dispositif médical, dans un circuit imprimé, dans une carte électronique, dans un connecteur microélectronique, dans un système de micro ou macrofluidique, dans un système optique ou optronique, dans un instrument de mesure.

## Patentansprüche

1. Flüssige Zusammensetzung, **dadurch gekennzeichnet, dass** sie enthält:
- mindestens eine bisphosphonische Verbindung als Träger mindestens einer teilweise fluorierten, perfluorierten (PF) oder Perfluorpolyethergruppe (PFPE) und dass die bisphosphonische Verbindung gelöst ist in
- mindestens einem nichtentzündlichen fluorierten Lösungsmittel, wobei das Lösungsmittel keinen Flammpunkt aufweist oder einen Flammpunkt über 60°C aufweist.

2. Zusammensetzung nach Anspruch 1, **dadurch gekennzeichnet, dass** das Lösungsmittel Fluorkohlenwasserstoffe (HFC), Hydrofluorether (HFE), Hydrofluorolefine (HFO) und Perfluorpolyether (PFPE) enthält, die allein oder gemischt verwendet werden.

3. Zusammensetzung nach Anspruch 2, **dadurch gekennzeichnet, dass**:
- die Fluorkohlenwasserstoffe Hydrofluor-(C₃₋₆)-Alkane, insbesondere Pentafluorbutan (HFC-365-mfc) sind,
- die Hydrofluorether (C₁₋₄)-Alkoxyperfluor-(C₄₋₈)-Alkane, insbesondere Methoxynonafluorbutan (HFE-7100), Ethoxynonafluorbutan (HFE-7200) und 1,1,1,2,2,3,4,5,5,5-Decafluor-3-methoxy-4-terfluormethyl-pentan (HFE-7300) sind, und
- die Hydrofluorolefine C₃-C₁₀-Hydrofluorolefine sind, die eine einzige Ethylendoppelbindung enthalten, insbesondere Methoxytridecafluorhepten,
- die Perfluorpolyether Moleküle sind, die eine perfluorierte kohlenstoffhaltige C₂-C₅-Kette aufweisen, die von Sauerstoffatomen unterbrochen ist, insbesondere Perfluorpropylenoxidpolymer.

4. Zusammensetzung nach einem der Ansprüche 1 bis 3, **dadurch gekennzeichnet, dass** das Lösungsmittel ebenfalls ein nicht fluoriertes Lösungsmittel enthält.

5. Zusammensetzung nach Anspruch 4, **dadurch gekennzeichnet, dass** das Lösungsmittel in Form eines azeotropen Gemischs vorliegt.

6. Zusammensetzung nach einem der Ansprüche 1 bis 5, **dadurch gekennzeichnet, dass** die bisphosphonische Verbindung der folgenden allgemeinen Formel (I) entspricht: 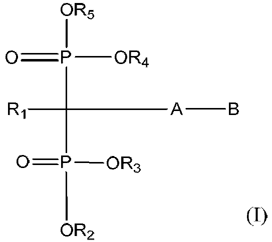 in welcher:
- R₂, R₃, R₄, R₅ unabhängig voneinander ein Wasserstoffatom oder eine C₁-C₁₀-Alkylgruppe wie Methyl oder Ethyl darstellen; vorzugsweise R₂, R₃, R₄, R₅ identisch sind und ein Wasserstoffatom darstellen;
- A eine chemische Einfachbindung, -O-, -S- oder -NH-, vorzugsweise eine chemische Einfachbindung darstellt;
- B darstellt:
a) eine lineare oder verzweigte, gesättigte oder ungesättigte C₁-C₁₀₀-Alkylkette, die perfluoriert oder teilweise fluoriert sein kann, und von 1 bis 10 Arylgruppen substituiert oder unterbrochen sein kann, die perfluoriert sein können oder nicht; oder
b) eine -(CH₂)ₘ-X-Gruppe, in welcher m eine Ganzzahl zwischen 1 und 100 ist und X eine gesättigte oder ungesättigte C₁-C₁₀₀-Alkylgruppe ist, die perfluoriert oder teilweise fluoriert sein kann, wobei die Alkylgruppe von 1 bis 10 Arylgruppen substituiert oder unterbrochen sein kann, die perfluoriert sein können oder nicht;
vorzugsweise B eine perfluorierte oder teilweise fluorierte C₉-C₂₀-Alkylgruppe darstellt; und
- R₁ ein Wasserstoffatom oder eine -OH-, -NH2-, C₁-C₁₀₀-Alkylgruppe darstellt, die perfluoriert oder teilweise fluoriert sein kann; R₁ vorzugsweise eine -OH-Gruppe darstellt,
sowie ihre toxisch akzeptablen Salze, ausgewählt aus den Natrium-, Kalium-, Magnesium-, Kalzium- und Ammoniumsalzen,
oder auch der folgenden Formel (I'): 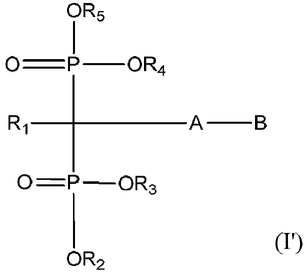 in welcher:
- B eine -(CH₂)ₘ-D-E-Gruppe darstellt, in welcher:
- m eine Ganzzahl zwischen 1 und 100 ist,
- D eine chemische Einfachbindung oder eine -O-,-S-, -OCO-, -COS-, -SCO-, -SCS-, -CONH-, -HNCO-, -HNCO-CF(CF₃)- oder -NH- CO-NH-, -NH-CS-NH-Gruppe ist, und
- E eine Gruppe ist; -(O-CF₂-CF₂)ₙ-ORf, -(O-CF₂-CF(CF₃))ₙ-ORf, -(O-CF(CF₃)-CF₂)ₙ-ORf oder -(O-CF₂-CF₂-CF₂)ₙ-OR_{f}, wobei n eine Ganzzahl zwischen 1 und 100 ist und R_{f} eine perfluorierte C₁-C₁₀-Alkylgruppe ist oder auch eine Gruppe: 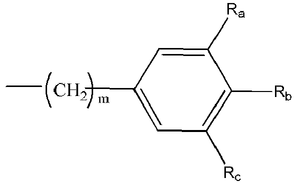
in welcher Rₐ, R_{b}, R_{c} unabhängig voneinander ein Wasserstoffatom, ein perfluoriertes C₁-C₁₀₀-Alkyl oder eine Gruppe darstellen: -(O-CF₂-CF₂)ₙ-OR_{f}, -(O-CF₂-CF(CF₃)ₙ-OR_{f}, -(O-CF(CF₃)-CF₂)ₙ-OR_{f} oder -(O-CF₂-CF₂-CF₂)ₙ-OR_{f}, wobei n und R_{f} wie zuvor definiert sind und m eine Ganzzahl zwischen 1 und 20 ist,
- A darstellt:
a) eine chemische Einfachbindung, oder
b) eine -O-, -S- oder -NH-Funktion, und
- R₁, R₂, R₃, R₄ und R₅ wie zuvor definiert sind, sowie ihre toxisch akzeptablen Salze, ausgewählt aus den Natrium-, Kalium-, Magnesium-, Kalzium- und Ammoniumsalzen.

7. Zusammensetzung nach Anspruch 6, **dadurch gekennzeichnet, dass** die bisphosphonische Verbindung der folgenden Strukturformel entspricht: 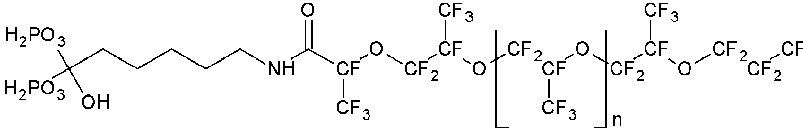 in welcher n= 1 oder n= 2.

8. Verwendung der Zusammensetzungen wie in den Ansprüchen 1 bis 7 definiert, um die lipophoben Eigenschaften zu steigern und um die Ausbreitung von Schmiermitteln und Kohlenwasserstoffen auf einer Oberfläche zu begrenzen oder um die hydrophoben Eigenschaften zu steigern und um die Ausbreitung von wässrigen Lösungen auf einer Oberfläche zu begrenzen.

9. Verfahren zum Bedecken der Oberfläche eines Teils mit einer Funktionalisierungsschicht, die erlaubt, die hydrophoben und lipophoben Eigenschaften der Oberfläche zu verbessern, **dadurch gekennzeichnet, dass** es die folgenden aufeinanderfolgenden Schritte umfasst:
a) gegebenenfalls vorherige Oxidation der Oberfläche des Teils,
b) Inkontaktversetzen der Oberfläche des Teils mit einer flüssigen Bedeckungszusammensetzung nach einem der Ansprüche 1 bis 7 bis zur Verbindung der bisphosphonischen Verbindungen, die sie enthält, zu einer Schicht, die die Oberfläche bedeckt,
c) Trocknen der derart bedeckten Oberfläche des Teils, vorzugsweise in Umgebungsluft.

10. Bedeckungsverfahren nach Anspruch 9, **dadurch gekennzeichnet, dass** das Inkontaktversetzen der Bedeckungszusammensetzung mit der Oberfläche des Teils durch Besprühen oder Eintauchen des Teils in eine Lösung durchgeführt wird, die zwischen 0,001% und 5% bisphosphonische Verbindungen enthält, während einer Zeit zwischen 1 Sekunde und 2 Minuten bei Umgebungstemperatur.

11. Bedeckungsverfahren nach einem der Ansprüche 9 oder 10, **dadurch gekennzeichnet, dass** ein zusätzlicher Reinigungsschritt durch Besprühen mit oder Eintauchen in ein Lösungsmittel zwischen Schritt b) und Schritt c) durchgeführt wird.

12. Bedeckungsverfahren nach einem der Ansprüche 9 bis 11, **dadurch gekennzeichnet, dass** das Teil ein Teil aus metallischem, mineralischem oder keramischem Material ist.

13. Bedeckungsverfahren nach einem der Ansprüche 9 bis 12, **dadurch gekennzeichnet, dass** das Teil ein Teil aus Edelmetall mit einem reduzierten oder schwach oxidierten Oxidationszustand oder ein Teil aus Kompositmaterial und/oder aus thermoplastischem oder wärmehärtbarem Polymer oder aus Hybridmaterial ist.

14. Funktionalisiertes Teil, das durch Durchführung des Verfahrens nach einem der Ansprüche 9 bis 13 erhaltbar ist.

15. Teil nach Anspruch 14, **dadurch gekennzeichnet, dass** es sich um ein Teil eines Mechanismus oder einer Vorrichtung handelt, der/die in einem Zeitmesser, in einem mikromechanischen, mechatronischen Objekt, in einer medizinischen Vorrichtung, in einem gedruckten Schaltkreis, in einer elektronischen Karte, in einem mikroelektronischen Verbinder, in einem Mikro- oder Makrofluidsystem, in einem optischen oder optronischen System, in einem Messinstrument integriert ist.

## Claims

1. Liquid composition **characterised in that** it contains:
- at least one bisphosphonic compound bearing at least one partially fluorinated, perfluorinated (PF) or perfluorpolyether (PFPE) group, and **in that** said bisphosphonic compound is dissolved in
- at least one non-flammable fluorinated solvent, said solvent not having a flash point or having a flash point higher than 60°C.

2. Composition according to claim 1, **characterised in that** said solvent contains hydrofluorocarbons (HFC), hydrofluoroethers (HFE), hydrofluoroolefins (HFO) and perfluorpolyethers (PFPE) used alone or in a mixture.

3. Composition according to claim 2, **characterised in that**:
- the hydrofluorocarbons are hydrofluoro-(C₃₋₆)-alkanes, in particular pentafluorobutane (HFC-365-mfc),
- the hydrofluoroethers are (C₁₋₄) alkoxy-perfluoro-(C₄₋₈)-alkanes, in particular methoxy-nonafluorobutane (HFE-7100), ethoxy-nonafluorobutane (HFE-7200) and 1,1,1,2,2,3,4,5,5,5-decafluoro-3-methoxy-4-terfluoromethyl-pentane (HFE-7300), and
- the hydrofluoroolefins are those with C₃ to C₁₀ containing just one ethylenic double bond, in particular methoxy-tridecafluoro-heptene,
- the perfluorpolyethers are molecules having a perfluorinated C₂ to C₅ carbon chain interspersed with oxygen atoms, in particular the polymer of perfluoropropylene oxide.

4. Composition according to one of claims 1 to 3, **characterised in that** said solvent also contains a non-fluorinated solvent.

5. Composition according to claim 4, **characterised in that** said solvent is in the form of an azeotropic mixture.

6. Composition according to one of claims 1 to 5, **characterised in that** the bisphosphonic compound corresponds to the following general formula (I): 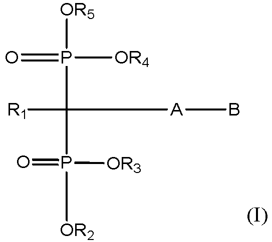 wherein:
- R₂, R₃, R₄, R₅ represent, independently of one another, a hydrogen atom or a C₁-C₁₀ alkyl group such as methyl or ethyl; preferably R₂, R₃, R₄, R₅ are identical and represent a hydrogen atom;
- A represents a single chemical bond, -O-, -S- or -NH-, preferably a single chemical bond;
- B represents:
a) a linear or branched, saturated or unsaturated C₁-C₁₀₀ alkyl chain, that may be perfluorinated or partially fluorinated, and can be substituted or interrupted by 1 to 10 aryl groups which may or may not be perfluorinated; or
b) a -(CH₂)ₘ-X group wherein m is an integer between 1 and 100 and X is a saturated or unsaturated C₁-C₁₀₀ alkyl group, which may be perfluorinated or partially fluorinated, the alkyl group may be substituted or interrupted by 1 to 10 aryl groups which may or may not be perfluorinated;
preferably, B represents a perfluorinated or partially fluorinated C₉-C₂₀ alkyl group; and
- R₁ represents a hydrogen atom or an -OH, -NH₂, C₁-C₁₀₀ alkyl group, that can be perfluorinated or partially fluorinated; R₁ preferably represents an -OH group,
as well as their toxicologically acceptable salts, chosen from sodium, potassium, magnesium, calcium and ammonium salts,
or even to the following formula (I'): 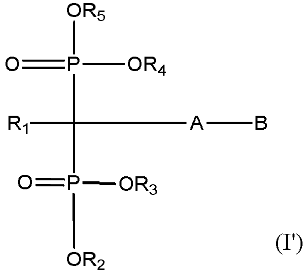 wherein:
- B represents a -(CH₂)ₘ-D-E group wherein:
- m is an integer between 1 and 100,
- D is a single chemical bond or an -O-, -S-, -OCO-, -COS-, -SCO-, -SCS-, -CONH-, -HNCO-, -HNCO-CF(CF₃)- or -NH- CO-NH-, -NH-CS-NH-group, and
- E is an -(O-CF₂-CF₂)ₙ-OR_{f}, -(O-CF₂-CF(CF₃))ₙ-OR_{f}, -(O-CF(CF₃)-CF₂)ₙ-OR_{f} or - (O-CF₂-CF₂-CF₂)ₙ-OR_{f}, where n is an integer between 1 and 100 and R_{f} is a perfluorinated C₁-C₁₀ alkyl group or even a group: 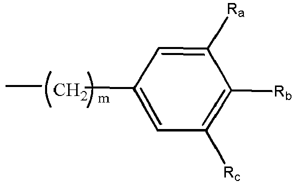
wherein, Rₐ, R_{b}, R_{c} represent, independently of one another, a hydrogen atom, a perfluorinated C1-C100 alkyl or an: -(O-CF₂-CF₂)ₙ-ORf, -(O-CF₂-CF(CF₃)ₙ-OR_{f}, -(O-CF(CF₃)-CF₂)ₙ-OR_{f} or -(O-CF₂-CF₂-CF₂)ₙ-OR_{f} group, where n and R_{f} are as previously defined and m is an integer between 1 and 20,
- A represents:
a) a single chemical bond, or
b) an -O-, -S- or -NH- function, and
- R₁, R₂, R₃, R₄ and R₅ are as previously defined, as well as their toxicologically acceptable salts, chosen from sodium, potassium, magnesium, calcium and ammonium salts.

7. Composition according to claim 6, **characterised in that** the bisphosphonic compound corresponds to the following developed formula: 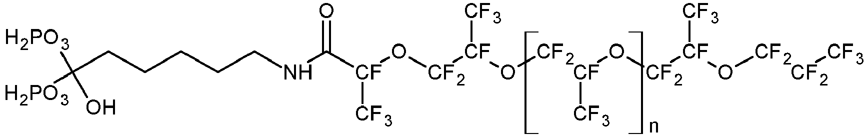 wherein n = 1 or n = 2.

8. Use of compositions as defined in claims 1 to 7, in order to increase the lipophobic properties and in order to limit the spreading of lubricants and hydrocarbons on a surface, or in order to increase the hydrophobic properties and to limit the spreading of aqueous solutions on a surface.

9. Method for covering the surface of a part with a functionalisation layer for improving the hydrophobic and lipophobic properties of said surface, **characterised in that** it comprises the following successive steps:
a) if necessary, prior oxidation of the surface of the part,
b) bringing the surface of the part into contact with a liquid coating composition defined by one of claims 1 to 7, until the bisphosphonic compounds that it contains have been assembled into a layer coating said surface,
c) drying of the surface of the thus coated part, preferably in ambient air.

10. Coating method according to claim 9, **characterised in that** the contact of the coating composition with the surface of the part is produced by spraying or dipping the part in a solution containing between 0.001% and 5% of bisphosphonic compounds, for a period between 1 second and 2 minutes, at ambient temperature.

11. Coating method according to one of claims 9 or 10, **characterised in that** an additional step of rinsing is carried out by spraying with or dipping in a solvent between step b) and step c).

12. Coating method according to one of claims 9 to 11, **characterised in that** the part is a metal, mineral or ceramic part.

13. Coating method according to one of claims 9 to 12, **characterised in that** the part is made from a noble metal having a reduced or slightly oxidised oxidation state, or made of a composite material and/or of thermoplastic or thermosetting polymer or made of a hybrid material.

14. Functionalised part that can be obtained by implementing the method according to one of claims 9 to 13.

15. Part according to claim 14, **characterised in that** it is a part of a mechanism or a device incorporated in a timepiece, in a micro-mechanical or mechatronic object, in a medical device, in a printed circuit, in an electronic card, in a microelectronic connector, in a microfluidic or macrofluidic system, in an optical or optronic system, in a measurement instrument.
